# EUROPEAN PATENT SPECIFICATION

(11) **EP 2 686 381 B1**
(45) Date of publication and mention of the grant of the patent: **12.10.2016**
(21) Application number: 12717592.5
(22) Date of filing: 19.03.2012
(51) Int. Cl.: C08L 1/02, C08L 89/04

(54) **COMPOSITE FILM AND FIBRE OF KERATINS AND CELLULOSE**
KOMPOSITE, FILME UND FASERN AUS KERATIN UND ZELLULOSE
FILM COMPOSITE ET FIBRES KÉRATINIQUES ET CELLULOSIQUES

(30) Priority: 18.03.2011 GB 201104684
(43) Date of publication of application: 22.01.2014
(73) Proprietor: Metz, Paul-Friedrich, 57334 Bad Laasphe (DE)
(72) Inventor: Metz, Paul-Friedrich, 57334 Bad Laasphe (DE)
(74) Representative: Zeitler Volpert Kandlbinder Patent- und Rechtsanwälte Partnerschaft mbB
(86) International application number: PCT/EP2012/001205
(87) International publication number: WO 2012/126605

(56) References cited:
- JP-A- 2002 167 401
- Krystyna Wrzesniewska-Tosik ET AL: "Novel Biocomposites with Feather Keratin", FIBRES & TEXTILES in Eastern Europe, 1 December 2007 (2007-12-01), pages 157-162, XP055046456, Retrieved from the Internet: URL:http://fibtex.lodz.pl/64_45_157.pdf [retrieved on 2012-12-04]
- ALUIGI ET AL: "Composite biomaterials from fibre wastes: Characterization of wool-cellulose acetate blends", COMPOSITES PART A: APPLIED SCIENCE AND MANUFACTURING, ELSEVIER SCIENCE PUBLISHERS B.V., AMSTERDAM, NL, vol. 39, no. 1, 14 December 2007 (2007-12-14), pages 126-132, XP022391280, ISSN: 1359-835X, DOI: 10.1016/J.COMPOSITESA.2007.08.022

## Description

The present invention relates to composites, in particular to films and fibres of cellulose or modified cellulose and keratin, and to methods for their production.

Films or sheets or membranes of cellulose and modified cellulose are available commercially and have various uses, including proposals for use as wall materials of packing various items.

Fibres have been extensively used in the textile industry, particularly in the field of underwear and wound dressing applications because of their many advantageous properties. In particular fibres made from natural sources, especially from polysaccharides, or from proteins, have been considered promising materials for next to skin textiles and for wound care due to their ability to imbibe aqueous based media and their biocompatibility as well as their softness and ability to be easily fabricated into many different forms of products.

In spite of a lot of advantages known to be brought by keratin fibres in textiles, their use decreased to only 2% of total fibres. At the same time the amount of wastes of keratin materials e.g. coarse fibres from various mammals, including humans, or feathers, increases steadily, which only brings problems of pollution. While several recycling approaches were developed for cellulose materials, making viscose-type fibres and re-using the moisture sorption properties of the cellulose, keratin wastes are still burned out, or disposed into soil.

One approach for re-using keratin materials is to sulphitolyse them for turning the material into a solution from which polypeptides of various molecular weights are isolated, as described in the patent of Keratec, U.S. Patent No. 7,148,327. However, the materials produced by the method outlined in this application are not useable for textile industry as fibres.

Accordingly, the present invention aims to address at least one disadvantage associated with the prior art whether discussed herein or otherwise.

This problem is solved with a composite according to the features of claim1 and a method with the features of claim 8 Preferred embodiments are further defined in the dependent claims. The features included therein, however, can also be combined with other features from the subsequent description.

The respective proposed features, in particular also of the respective independent claims only serve as a first proposal for a solution of the object, wherein one or plural of the features included in the independent claims can also be supplemented and/or replaced by the subsequent features.

A composite is suggested comprising cellulose, or modified cellulose, and keratin polypeptide, wherein keratin polypeptides are mixed with said cellulose without any phase separation between keratin polypeptide and cellulose.

Without any phase separation means that almost no phase exists like in a conjugate fiber having a first and a discrete second phase without being mixed. Instead, the composite is a product in which at least the cellulose and the keratin are mixed together without forming phase separations like in conjugate fibers but having an almost homogenous distribution across a related mixture zone of both materials.

It is preferred to have a composite wherein the keratin comprises a disrupted keratin. Furthermore the composite comprises a keratin being a hydrolysed keratin.

According to a further improvement the composite is a composite film or composite fibre comprising one or more polysaccharides and/or one or more modified polypeptides. Nevertheless, also other composites according to the invention might comprise one or more polysaccharides and/or one or more modified polypeptides.

Preferably, keratin polypetides are bonded to a cellulose polymer of said cellulose along the length of said composite.

A composite as proposed might comprise a mixture of cellulose and keratin wherein the ratio of cellulose or modified cellulose : keratin polypeptide remains substantially constant, preferably along the whole composite length. Nevertheless, the ratio can decrease or increase by adjusting the ratio during manufacturing. The ratio can be changed constantly and/or stepwise. According to a further improvement the ratio of cellulose or modified cellulose: keratin polypeptide is between 99:0.1 and 10:90 by weight of the composite.

A preferred composite as suggested comprises a structure wherein cellulose polymer and keratin polypeptide are bonded to each other along the entire surface of a composite film or length of a composite fibre. Especially preferred is a composite wherein the composite film or composite fibre comprises both cellulose or modified cellulose polymer and keratin polypeptide throughout its surface or length, respectively, and cross section.

A composite according to one preferred application is a composite fiber having a length of at least 3 millimeters and a diameter of preferably of at least 5 µm up to 50 µm, preferably between 5 µm and 15 µm.

Furthermore, the suggested composite is a composite, preferably a composite film or composite fibre, which can absorb and/or retain at least 10 times its weight of water.

The composite can be used in different applications. A composite as suggested can be used in a product, especially in
- Packages,
- Covers, e.g., CD cases,
- Decorations, for example trim materials for covering objects,
- Covering material in the area of agriculture or for environmental purposes,
- Coating, roofing, heat or noise insulation or filter material,
- Wall covers in the building area,
- Cleaning cloths,
- Hygiene applications like storage layers and cores of pads, diapers and the like, but also acquisition layers of hygiene products,
- Textiles, especially medical textiles like wound treatment, but also clothing like socks, underwear, climatic clothing,
- in combination with e.g. wool used for e.g. clothing of all sorts,
- in beddings like cushions, blankets, pillows, pillowslips, bed linen etc., and/or
- in absorbing products.

The absorbing product can be used e.g. in a disposable product for hygiene applications. The absorbing structure can also be the disposable article itself. Preferably, these disposable products are used for baby diapers, female hygiene and incontinence products. Furthermore, such disposable products can be used in the field of:
- medical products, like e.g. absorber materials and absorber mats; or
- industrial products, like e.g. absorbing materials for receiving liquids.

An embodiment of the absorbing structure provides that the absorbing structure includes a super absorber. The super absorbing material e.g. provided as SAP particles and/or SAP fibers is capable of swelling and typically transitions into a gel type condition. Thus, they cannot only store water. Rather, the SAP particles are capable for a disposition in the layered structure to generate a suction flow, thus functioning e.g. as a drainage material for a liquid distribution layer.

From a chemical point of view, SAP can be copolymers, which include acrylic acid and sodium acrylate, wherein the ratio of the two monomers relative to one another can vary. Additionally, e.g. crosslinking materials are added for polymerization, which link the formed long chain polymer in particular locations through chemical bridges. The properties of the polymer can be adjusted as a function of the degree of crosslinking. For example, SAP materials can be used as they are shown in EP 08 10 886, in particular also shown in the art cited therein, which is incorporated into the disclosure by reference in its entirety. An embodiment provides e.g. that SAP particles include a coating. The coating can e.g. dissolve when it comes in contact with a liquid, in order to enable the absorption of the liquid through the SAP particle in the first place. Furthermore, SAP material can be used as respectively evident from DE 10 2004 015 686 A1, DE 698 217 94 and/or DE 10 2004 005 417 A1 respectively, in particular with reference to the structure, the geometry of the super absorbing polymer and also the materials and methods employed in its production.

Another embodiment provides that the SAP particles can be granular, or they can also have a different geometry. They can e.g. be fibrous, round or shaped differently. Fibers with a super absorber content can also be derived.

The respective layers thus can include identical or different types of cellulose fibers and/or SAP particles and/or SAP fibers. This way, the absorption properties of the layer structure for liquids can be adjusted in a defined manner.

Those application respectively products mentioned above are given here only by way of example without any claim to completeness.

According to an aspect of the present invention there is provided a composite fibre of cellulose and keratin suitable for use in textile products, wherein keratin polypeptides are bonded to cellulose polymer along the length of the fibre.

Suitably, the fibre comprises a bicomponent fibre of cellulose and keratin.

Suitably, cellulose polymer and keratin polypeptides are bonded to each other along the entire length of the fibre.

Suitably, the keratin comprises a disrupted keratin. Suitably, the keratin comprises a hydrolysed keratin.

The keratin may comprise a disrupted, for example hydrolysed, keratin having a number average molecular weight (Mₙ) of between 0.5KDa and 10KDa, for example around 2KDa. Suitably, this molecular weight may be determined by MALDI ToF analysis.

The keratin may comprise a disrupted, for example hydrolysed, keratin having a weight average molecular weight (M_{w}) of between 0.5KDa and 150KDa, for example around 40KDa. Suitably, this molecular weight may be determined by gel-chromatographic analysis.

The keratin may comprise a disrupted, for example hydrolysed, keratin having a viscosity average molecular weight (Mᵥ) of between 0.5KDa and 150KDa, for example around 26KDa. Suitably, this molecular weight may be determined by gel-chromatographic analysis.

The term cellulose relates to a polymer composed of D-glucose (G) monomeric units. A cellulose structure is exemplified below.

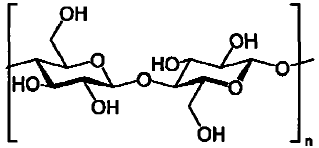

By keratin it is meant feather, nails, hoof, horn, fish scales, or any animal / human hair per se. Suitably, the keratin comprises keratin that has been subjected to a controlled degree of disruption. Suitably, the keratin comprises hydrolysed keratin.

Structure of keratin is described in various publications, for example in Crisan Popescu and Hartwig Hoecker, "Hair-the most sophisticated biological composite material" in Chem. Soc. Rev., 2007, 36, 1282-1291. The nature of the keratin material of the present invention may be chosen largely out of consideration for the amount of wastes for being used. That said, the keratin of the present invention may suitably come from feathers and coarse wool, for example from feathers.

The keratin polypeptides suitably have a reduced molecular weight in the range from 0.5 to 150 kDa.

Disruption may be effected by any suitable means, for example, chemical means. Suitably, it is effected by hydrolytic, e.g. superheated water, means.

Hydrolysis of the keratin material may be achieved by treatment with alkali, or acids, but is preferably achieved by treatment with water at high temperature, and consequent pressure.

Suitably, the film or fibre comprises both cellulose polymer and keratin-based polypeptides throughout its length. The fibre may comprise both cellulose polymer and keratin-based poly-peptides throughout its cross- section.

The concentration of keratin polypeptides may be substantially the same in the centre, mid and outer regions of the film or fibre. The concentration of keratin polypeptides may be substantially constant across the film surface or fibres diameter. Suitably, the film or fibre comprises a homogenous mix of keratin polypeptides and cellulose polymers throughout.

Suitably, the ratio of cellulose: keratin-based polypeptides may remain substantially constant along the film surface or fibre length.

The ratio of cellulose: keratin-based polypeptides may be between 99:1 and 20:80 by weight. The ratio by weight of cellulose: keratin-based polypeptides may for example be between 98:2 and 95:5. Suitably, the ratio by weight of cellulose: keratin-based polypeptides is between 70:30 and 30:70, for example between 60:40 and 40:60, for example around 50:50.

Suitably, the film or fibre comprises keratin polypeptides, suitably hydrolysed keratin, in an amount of between 1% and 80% by weight. Suitably, the film or fibre comprises cellulose in an amount of between 20% and 95% by weight.
The film or fibre may comprise keratin-based polypeptides in an amount of at least 0.1 % by weight, for example at least: 1.0%; 1.5%; 2.0%; 2.5%; 3.0%; 3.5%; 4.0%; or 4.5% by weight.

The film or fibre may comprise cellulose in an amount of at least 20% by weight, for example at least 25%; 30%; 35%; 40%; 45%; 50%; 55%; 60%; 65%; 70%; 75%; 80%; 85%; 90% or 95%.

Suitably, there is provided a bicomponent film or fibre of cellulose polymers, keratin-based polypeptides suitable for use in various packing and textile products, wherein both polymers are bonded to each other along the entire length of the fibre.

Suitably, the fibre is not in the form of a substrate and coating. The fibre may thus not be of a "core-sheath" construction.

The fibre may have improved tensile properties and/or improved liquid absorbency compared to either cellulose or keratin fibres.

Suitably, the fibre can absorb and/or retain at least 10 times its weight of water, for example at least 15 times its weight.

The fibre may comprise a bicomponent fibre of cellulose and keratin-based polypeptides that has both good textile processability and is of substantially uniform composition along the length of the fibres produced.

The film or fibre may be characterised by FT IR spectrum peaks at 935cm⁻¹, 1000cm⁻¹ and 1660cm⁻¹.

The film may be produced by casting cellulose and keratin solution onto a flat surface such as a glass plate, and allowing the water to evaporate at room temperature results in the formation of a cellulose-keratin composite film. These films have a high degree of clarity and have the strength at break in dry form of at least 10 MPa and extension at break of at least 10%.

The film or fibre may comprise one or more additives to enhance performance and functional requirements. Examples of additives that may be incorporated into the fibre either during the production of the fibre or by subsequent post treatment are glycerol, for increasing flexibility of the film, or fibres, polypeptides cross-linkers like aldehydes (for example formaldehyde or glutaraldehyde) or ethers (ethylene glycol diglycidyl ether, glycerol diglycidyl ether), or antimicrobial agents, agents known to influence wound healing and fragrances for the purpose of colouring and finishing.

The film or fibre may comprise keratin, suitably modified keratin, and cellulose which are suitably chemically bonded to one another. The fibre may consist of keratin, suitably modified keratin, and cellulose.

The film or fibre of the first aspect may be prepared according to the method of the fifth and/or sixth aspect as described hereinafter. Suitably, the film or fibre is prepared according to the method of the fifth aspect.

The film or fibre of the first aspect may comprise any feature as described in relation to the film or fibre of the second aspect hereinafter.

The film or fibre may comprise any feature as described in relation to the film or fibres of the third aspect hereinafter.

According to a second aspect of the present invention there is provided a composite film or fibre of cellulose and keratin materials suitable for use in packing or textile products, wherein the ratio of cellulose: keratin-based polypeptides remain substantially constant along the film surface or fibre length.

The ratio of cellulose: keratin-based polypeptides may be between 99:1 and 20:80 by weight. The ratio by weight of cellulose: keratin-based polypeptides may for example be between 98:2 and 95:5. Suitably, the ratio by weight of cellulose: keratin-based polypeptides are between 70:30 and 30:70, for example between 60:40 and 40:60, for example around 50:50.

Suitably, the keratin polypeptide content of any given area of film or length of fibre is substantially the same as that of any other like surface of the same film or length of the same fibre. Suitably, the keratin content of any given I cm² surface of film, or 1 cm length of fibre is within 1% by weight of that of any other I cm² surface of the same film, or I cm length of the same fibre.

Suitably, the film or fibre comprises a bicomponent film or fibre of cellulose and keratin polymers.

The film or fibre of the second aspect may comprise any feature as described in relation to the film or fibre of the first aspect.

The film or fibre may comprise any feature as described in relation to the films or fibres of the third aspect hereinafter.

The film or fibre of the second aspect may be prepared according to the method of the fifth and/or sixth aspect as described hereinafter. Suitably, the film or fibre is prepared according to the method of the fifth aspect.

According to a third aspect of the present invention there are provided composite films or fibres comprising polysaccharide (s) and/or modified polysaccharide (s).

The composite films or fibres may comprise polysaccharide (s) and oligosaccharide (s) derived from polysaccharide (s) having a higher molecular weight.

The films or fibres may be based on cellulose and modified keratin, and may be suitable for use in medical applications like wound management products.

The fibres may be produced by extrusion of a solution of alginate into a solution of keratin, or vice versa, in a manner which induces insolubility.

The films may be produced by casting a mixed solution of alginate and a solution of keratin and adding a solution which induces insolubility.

The insolubility of the cellulose and/or modified keratin may be induced by alkali, acid and/or cross-linkers based on aldehydes, or ethers.

The molecular weight of the keratin-based polypeptides may be in a narrow range.

The keratin-based polypeptides may be derived by suitable biological, radiolytic, biosynthetic or chemical means.

The keratin-based polypeptides may be derived by acidic chemical means.
The keratin-based polypeptides may be derived by acidic chemical means using mineral acid and/or organic acid.

The keratin-based polypeptides may be modified by additional chemical treatment.

The keratin-based polypeptides may impart antimicrobial activity to the composite fibres.

Composite film or fibre polysaccharide components may include carboxymethyl cellulose, pectin, hyaluronan, chondroitin sulfate, maltodextrin, branan ferulate, inulin and/or trehalose.

The films or fibres may contain antimicrobial agents, such as silver compounds.

The films or fibres may contain pharmaceutical compounds.

Suitably, films or fibres according to the third aspect comprise films or fibres according to the first and/or second aspect.

Films or fibres according to the third aspect may comprise any feature as described in relation to the first or second aspects.

According to a fourth aspect of the present invention there is provided a film or fibre material comprising a plurality of fibres according to the first and/or second aspect and/or third aspect.

Suitably, there is provided a fibre material comprising a plurality of fibres according to the first and/or second aspect.

Suitably, the fibre material may comprise a non-woven material, a yarn, a knitted material or a woven material.

Preferably a film as suggested is a membrane. The membrane might comprise microapertures and/or is perforated. Microaperturing might be achieved by stretching the film which incorporates filler material. At the boundaries of those filler materials with the film material the latter ruptures and thereby microperforations are achieved. The film might be fluid permeable. According to one embodiment the film might be gas permeable but liquid impermeable. According to another embodiment the membrane is gas and liquid permeable.

A further idea of the invention which might be independent but also in combination with the suggested composite is a method of producing a composite, especially in form of a composite fibre or composite film, comprising cellulose or modified cellulose and keratin polypeptide is proposed, said method comprising the step of contacting a solution or paste of cellulose with a solution of keratin and manufacturing a composite without separation of said cellulose and said keratin.

The method preferably comprises the step of extruding a solution, or a paste of one of cellulose or modified cellulose, and keratin polypeptide solution directly into a bath of coagulation.
For producing a composite fibre of cellulose and keratin-based polypeptides, said method comprises the step of fibre formation from a solution of cellulose and keratin-based polypeptides directly on a solid support as a target.

According to another embodiment the method of producing a composite film or composite fibre of cellulose or modified cellulose and keratin comprises the step of extruding a solution, or a paste of one of cellulose or modified cellulose, or keratin directly into a bath of the other of cellulose or keratin polypeptide solution.

Furthermore, it is suggested that said method comprises the step of extruding a solution/paste of cellulose or modified cellulose directly into a coagulation bath with keratin polypeptide solution.

It is preferred that the method comprises extruding a solution or paste of cellulose and of keratin solution comprising keratin that has been subjected to a controlled degree of disruption. Preferably, a disruption of the keratin is achieved by hydrolysis.

A further embodiment of the method comprises that the composite film or fibre formed in the film or fibre forming step is subjected to a washing operation.

With a method of producing a composite as mentioned above or in the following, the composite, especially the composite film or composite fibre as mentioned can be manufactured especially only with use of water without using any other solvent.

According to a fifth aspect of the present invention there is provided a method of producing a composite fibre of cellulose and keratin, said method comprising the step of extruding a solution of one of cellulose or keratin directly into a bath of the other of cellulose or keratin solution. Suitably, there is provided a method of producing a composite fibre of cellulose and keratin-based polypeptides, said method comprising the step of extruding a solution of cellulose directly into a coagulation bath of keratin solution.

Alternatively, there may be provided a method of producing a composite fibre of cellulose and keratin-based polypeptides, said method comprising the step of extruding a solution of cellulose and keratin-based polypeptides directly into a coagulation bath.

Alternatively, there may be provided a method of producing a composite fibre of cellulose and keratin-based polypeptides, said method comprising the step of fibre formation of a solution of cellulose and keratin-based polypeptides directly on a solid support (target).

Suitably, the method comprises extruding a solution of cellulose directly into a coagulation bath of keratin solution comprising keratin that has been subjected to a controlled degree of disruption.

Suitably, the disruption of the keratin is achieved by hydrolysis, suitably in water at high temperature and corresponding pressure. The method may thus include hydrolysing keratin to produce polypeptides for use in the fibre forming step. Suitably, the method comprises subjecting keratin to a controlled degree of hydrolysis.

Suitably, the fibre produced comprises a bicomponent fibre of cellulose and keratin-based polypeptides.

Suitably, the keratin employed in the coagulation bath comprises a disrupted, suitably hydrolysed, the polypeptides having a number average molecular weight of between 0.1 KDa and 40KDa, for example around 2KDa. Suitably, this molecular weight may be determined by MALDI ToF analysis.

Suitably, the cellulose solution comprises cellulose in aqueous solution in an amount of 0.5 to 10% (w/v), for example 1 to 6% (w/v).

Suitably, the keratin-based polypeptides solution comprises polypeptides in an amount of 0.1 to 30% (w/v), for example 0.5 to 15% (w/v).

Suitably, the composite film or fibre formed in the film or fibre forming step is subjected to a washing operation.
The composite film or fibre may be washed by being passed through water.

Suitably, the film or fibre is dried, for example using hot air.

Suitably, after drying, the film or fibre is further processed. The film or fibre may be wound up and may then be further processed. The fibre may for example be processed into non-woven felts or ropes or other structures commonly used for wound management. The film may for example be processed into cellulose packing film.

Suitably, the film or fibre produced by the method comprises a film or fibre according to the first and/or second aspect.

Suitably, the first stage of the composite film or fibre production process is to generate keratin-based polypeptides having a controlled degree of purity by carrying out hydrolysis of keratin under judiciously selected and carefully controlled reaction conditions. The effect of hydrolysis is to suitably cause depolymerisation of keratin to a controlled degree.

Suitably, this hydrolysis results in the formation of a range of molecular sizes of keratin-based polypeptides thereby broadening the molecular weight distribution of the polymer. The lowering of the molecular weight of the keratin may have a major effect on chemical fusion/attraction of the keratin and cellulose at the point of fibre inception.

It may not be possible to form the composite cellulose/keratin film or fibre in the manner described in this invention using commercially available wastes of keratin, without first subjecting them to disruption, for example by undergoing hydrolysis under appropriate conditions.

Although base or acidic hydrolysis may be used, it may be preferred that hydrolysis is effected under neutral conditions suitably using water at temperature above 180°C and corresponding pressure. The hydrolysis process may involve dissolving 0.1-30% (w/v), suitably 20-25% (w/v), for example 23- 24% (w/v) of keratin in closed pressure resistant reactor with water suitably at 180°C. This may be followed by vigorous stirring for 3-4 hours. The resulting solution is left cooling for up to 24 hours, suitably for between 4-16 hours, for example 6-8 hours and then filtered.

The keratin-based polypeptides solution thus produced may be used as additive to the cellulose solution / paste which is extruded directly into the fibre. This extrusion process may result in cellulose-polypeptides chemically fusing together upon contact. This may thus result in the production of a fibre that is constructed from a balanced contribution of both cellulose and keratin at any one point along the entire length of the fibre.

The cellulose polymer solution is suitably ejected under pressure, suitably of around 20 bar, suitably through a spinneret, into a coagulation bath of keratin based polypeptides, suitably prepared as described above. The spinneret suitably has a number of apertures of defined diameter, for example 40 to 200 holes suitably with an average diameter of around 50µm.

Suitably, the cellulose solution (dope) is delivered into the keratin solution, suitably into the hydrolysed bath, at a rate of around 7cm³/min. The fibre may then be drawn, suitably up to a maximum of 100%, by pick up rollers before being washed. Suitably, the fibre is washed in water, for example in lukewarm water, preferably 50- 60°C, and suitably dried by passing through baths of acetone-water mixtures with increasing concentrations of acetone in each bath. Three baths may be used and the first bath may contain around 50% acetone, the second around 70% acetone and the final bath around 100% acetone. This may enable the fibre to be dried using hot air, preferably in the range of 60- 80°C as it is wound onto a spool.

A fibre produced by this method may be found to have improved absorption characteristics when compared to cellulose or keratin fibres and to be robust in terms of force to break in comparison with cellulose fibres. The tenacity of a cellulose/keratin composite fibre produced according to the method of this invention may lie in the range between 0.8 to 10 cN/tex, whereas typical values for cellulose fibres may be between 2-10 cN/tex.

The absorption of a cellulose/keratin composite film or fibre produced according to the method of this invention may lie in the range from 10-35 (g/g) for water. The film or fibre dimensions may also enlarge significantly upon exposure to water.

The produced fibres may have distinctive morphological characteristics i.e. rough/rouged surface with near perfect uniformity resembling surface characteristics of wool fibres. These features may be distinctly different to those of pure cellulose fibres.

The fibre properties may be manipulated by including other additives to enhance performance and functional requirements. Examples of additives that may be incorporated into the fibres of the invention either during the production of the fibres or by subsequent post treatment are: cross-linkers such as formaldehyde, or glutaraldehyde, or ethylene glycol diglycidyl ether, or glycerol diglycidyl ether; antimicrobial agents such as silver ions, or any antibiotic drug, agents known to influence wound healing such as zinc ions, aloe vera or salts of hyaluronic acid and fragrances such as lavender or oil of rosemary.

According to a sixth aspect of the present invention there is provided a method of producing a composite fibre or film of cellulose and keratin, said method comprising the step of contacting a solution / paste of cellulose with a solution of keratin.

The method may comprise a method of producing a composite film or fibre.

Suitably, the method comprises a method of producing a composite fibre of cellulose and keratin, said method comprising the step of mixing a solution of cellulose with one of keratin directly into a spinning bath.

The method may comprise any feature as described in relation to the fifth aspect.

The method may alternatively comprise a method of producing a composite film.

The method may comprise forming a mixture of cellulose and keratin solution on a supporting surface and evaporating the water until the film formation.

Suitably, the cellulose solution comprises cellulose pulp.

Suitably, the keratin solution comprises keratin that has been subjected to a controlled degree of disruption.

Once formed the composite film may be washed. The film may be produced and/or processed according to any feature described in relation to the fibre forming method of the fourth aspect except where such features are mutually exclusive.

According to a seventh aspect of the present invention there is provided a composite film comprising cellulose and keratin.

Suitably, the film is produced according to the film forming method of the fifth aspect.

The invention will now be described by way of example with reference to the accompanying drawings in which:
Figure 1 is a first SEM image of a keratin-cellulose fibre;
Figure 2 is a second SEM image of the same keratin-cellulose fibre in higher magnitude;
Figure 3 is a third SEM image of the same keratin-cellulose fibre with different magnitude.

The present invention will now be described further by way of example with reference to the following examples. Examples 1 to 3 describe processing techniques and parameters used to produce composite fibres.

Example 1: 20g of chicken feathers, supplied by Treude & Metz GmbH & Co. KG, Germany, was dissolved by heating at 180°C in 100mL of water in a closed stainless vessel. The solution was stirred for 1 hour until a homogeneous solution was obtained. The vessel was opened and solution was allowed to cool.

The average molecular weight of the keratin after hydrolysis was: M_{w} 993.2 Da and was measured by MALDI ToF analysis.

Cellulose solution 6% (w/v) in water was prepared using cellulose triacetate of Sigma Aldrich and acetic acid 20% for making the pH of 3.

Extruded fibres were drawn, washed in warm water and passed through acetone water mixtures of increasing acetone concentrations of 50%, 70% and 100% before being dried by hot air. The properties of the fibres when tested were tenacity of 1.3-3.0 cN/tex, elongation at break 5.3-10%, water absorption 15-25 g moisture / g fibre.

Example 2 : keratin polypeptides and cellulose solutions are prepared as in Example 1 and -1% formaldehyde was added to the keratin solution prior to extrusion. This lead to fibres with modified physical and mechanical properties. The properties of the fibres when tested were tenacity of 2-5.3 cN/tex, elongation at break 4-15%, and water absorption 14-25 g moisture / g fibre.

Example 3: 40 g of feather, supplied by Treude & Metz GmbH & Co. KG, Germany, as used in Example 1, was dissolved by heating at 180°C in 200mL of water and 10cm³ of acetic acid in a closed stainless vessel. The solution was stirred for 1 hour until a homogeneous solution was obtained. The vessel was opened and hydrolysed solution was allowed to cool. The prepared alginate dope as described in Example 1 was extruded into the hydrolysed bath. This was subsequently drawn and washed before drying by hot air. Recorded fibre properties were similar to those in Example 1.

Example 4: Keratin-cellulose fibres were extruded by a wet spinning process. A cellulose dope was spun into a hydrolysed keratin bath drawn and washed as per the method to produce fibres. The bath solution had a pH of 3.2, and comprised a 4 % (w/v) keratin solution hydrolyzed for one hour. Fibres were obtained for draw ratios of 1.08, 1.15 and 1.23 respectively.

The wet spinning process was performed with an apparatus which is described in general in "Elektrospinnen: eine faszinierende Methode zur Präparation ultradünner Fasern", A.Greiner, J.Wendorff, Angewandte Chemie, 2007, 119, 5770-5805, Wiley VCH-Verlag. The fibers were produced having a distance between the top of a hollow needle being in connection with a syringe and a target of 15 cm, a flow rate of 0,2 - 0,3 mL/h and a voltage applied between 15 - 20 kV.

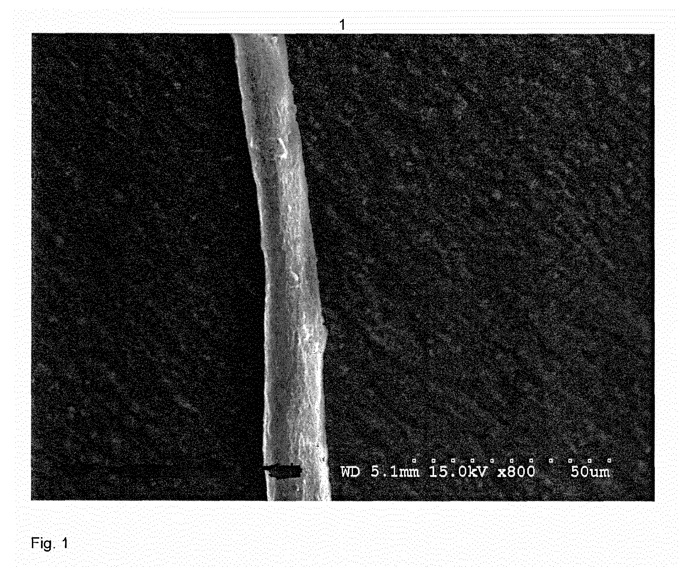

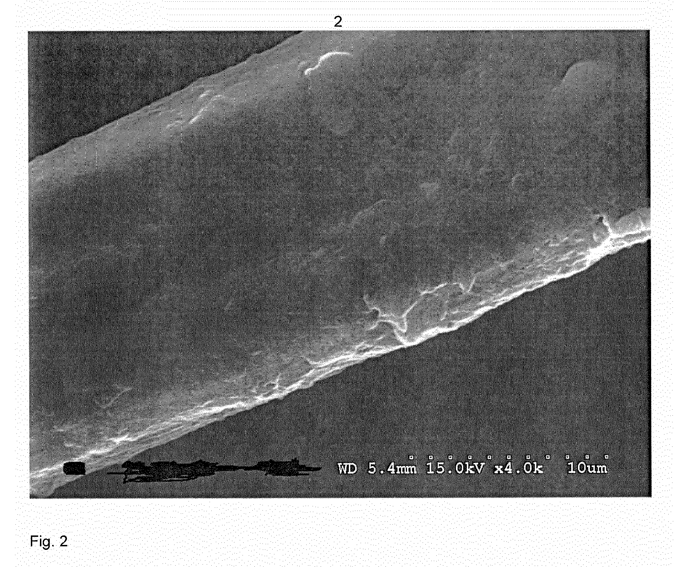

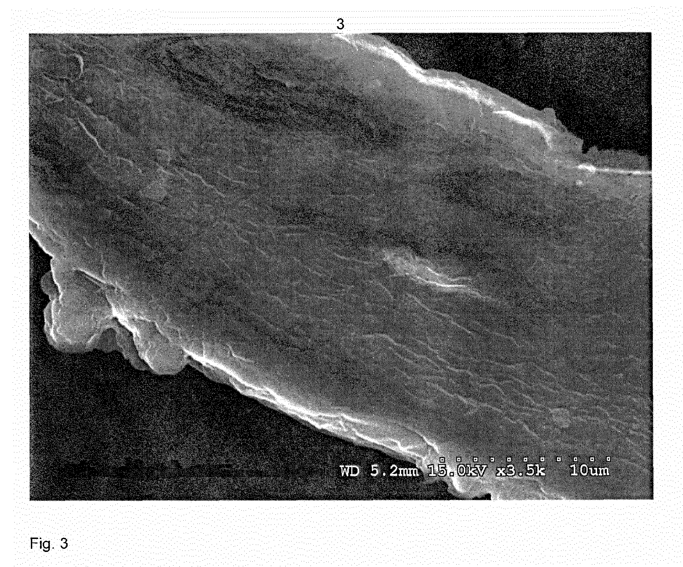

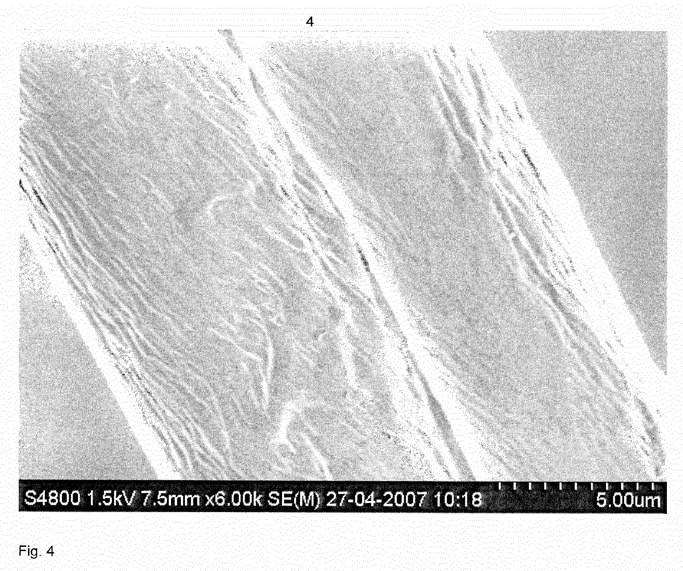

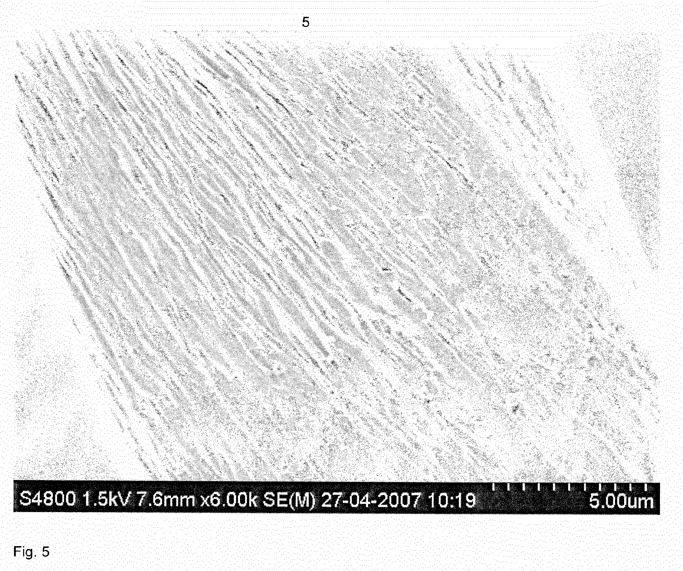

Figures 1, 2 and 3 are optical images showing a keratin-cellulose fibre of Example 1 at different magnification, especially at 200 times magnification. Fig. 4 and Fig. 5 is a pure cellulose fiber in different magnification, only for comparison.

Table 1 illustrates that fibres of preferred embodiments of the present invention have a tenacity which is sufficiently high to enable them to function as textile fibres and wound dressing fibres.

Table 1 (data measured at relative humidity 65%, temperature of 22°C)
Elasticity modulus (Young modulus) in GPa: 1...2 GPa
Elongation at break (%): 15...20%
Stress at break (MPa): 120...150 MPa

Table 1 also shows that the elongation at break and work to rupture values of the fibres of preferred embodiments of the present invention were suitably high. The fibres of Example 4C had particularly high work to rupture value.

It can be seen from that the cellulose fibre shows a smooth surface relative to the keratin-cellulose fibres (Figures 1 to 3 and Fig. 4 and 5). The keratin-cellulose fibres showed a rugged and yet homogeneous blend of the constituent keratin and cellulose components.

The Fibres of Example 1-4 were studied by RAMAN spectral analysis together with a sample of pure keratin. In all the fibres, the differences in draw ratio were found not to significantly affect their spectrogram. The bands associated with amide I (1628 cm⁻¹) and phenylalanine (1000 cm⁻¹) are present in all fibres, whereas the S-S band at 400 cm⁻¹ and amide III bands in the region 1200-1400 cm⁻¹ are absent in fibres but present in raw materials (feathers).

It will be appreciated by those skilled in the art that preferred embodiments of the present invention may provide a bicomponent film or fibre of keratin and cellulose that has desirable physical properties and good processability.

The incorporation of the keratin into the cellulose material can occur in different ways. For example, crushed and possibly fractionated cellulose materials can be processed together with one or more keratins, which can also be present in a finely divided form, in a mixer, for example, in a heating-cooling mixer combination to an agglomerate. In this process, other additives, e.g., processing aids, can be measured in. These agglomerates are formed, for example, in a subsequent extrusion process to a product in the form of a fiber or film.

The incorporation of the cellulose material and the keratin material can, for example, also take place in a stream of gas, in which mixing and possibly milling of cellulose particles occurs, as well as a batch coating of the cellulose particles with keratin material in the gas stream.

In another embodiment of the invention, a mixed material of cellulose and keratin can result by a direct processing of the keratin and cellulose components on a double screw extruder with screw shafts running in the same direction or opposite directions.

A preferred version of the invention provides that a system with a double screw extruder is used, whereby the double screw extruder has a degassing system.

Preferable here is a system for manufacturing an extruded product comprising a cellulose polymer material comprising at least a keratin material obtained, whereby a double screw extruder is used to mix those materials and dried the material. The double screw extruder comprises mixing zones for mixing the materials. In this direct processing, the keratin polypetide can be measured into the extruder and the cellulose material can be supplied by way of a separate hopper, which opens into the supply line to the extruder.

A preferred embodiment of the method provides that a master batch to be extruded is prepared.

A master batch is understood to mean a material produced in granulate form, which has a keratin component and a portion of cellulose material. If necessary, other additive can also be used in the form of processing aids, dyes, pigments or functional additives, for example, flame retardants or antistatics. This master batch can preferably be equipped with a very high content of cellulose materials and for example manufactured on a double screw extruder with screw shafts running in the same direction, a so-called compounder. This master batch can then be used directly for manufacturing a product or portions can be added to a polymer in order to be able to process it to a product.

In one embodiment, the invention provides a master batch, which is preferably used for manufacturing fibers, but also films.

The manufactured polymer product can be designed alone or as a composite with other nonwovens or materials, for example, with another polymer product in the form of a film or several films. In particular it can be connected with the other material to form a layered material. After it is manufactured, the resulting flat monolayer or multilayer fabric can also be embossed, bonded, laminated and/or mechanically treated, especially connected with another material. For example, this can occur physically, chemically and/or with form fitting. For example, thermal and/or ultrasonic connection possibilities can be used in order to connect the individual layers to each other. In embossing-bound polymer products in the form of monolayer or multilayer nonwovens or nonwoven-film laminates, embossing surfaces can be provided with a percentage of 10%-50%, related to the entire surface of the flat fabric. Manufacturing of a laminate of several layers of a nonwoven from spun-bond, airlaid or melt-blown fibers or combinations thereof can be manufactured according to the technical teaching disclosed, for example, in US5178931, US3704198, US3849241, US5188885, EP 1721 036, DE 10 2004 009 556 A1, DE 199 183 43 A1 and WO 2005/080655 A1, whereby the product has a composite fiber and/or composite film of cellulose and keratin being mixed without almost any separation zones but an almost homogenous cross-structure. In addition, an adhesive, for example a spray adhesive or a so-called hot-melt adhesive, latex-based adhesive or other adhesive can be used.

In a further development of the invention, several bonds of the same or different types can be combined and formed to make a laminate of these bonds. Advantageously, a laminate can also be formed in which at least one film is combined with at least one nonwoven.

For laminate formation, different types of processing are possible. For example, individual layers can be manufactured as nonwoven or film in separate processing steps, which are joined in another processing step, for example a calendering step, to form a laminate, whereby different calender roller arrangements can be provided that cause a thermal compacting of the laminate. A calendering method such as this is described, for example, in US 3,855,046. Usually, smooth or profiled calender rollers are used, which can be combined with each other according to the planned usage purpose and required characteristics profile for the laminate. With the use of embossing rollers, discrete embossed bonds can be formed in the laminate. Methods for manufacturing separate layers and laminate produced from them are described, for example, in DE 4311867.

Another possibility for laminate formation can consist in that a nonwoven is formed and this nonwoven is coated in-line with a film. On the other hand, a film can be extruded first, which, for example, is placed on a holding line, whereby a created nonwoven is deposited in-line on this film. The composite formation can also occur here using a calendering arrangement. In addition, other types of composite formation are also possible, for example by needling or water stream compacting.

The present invention aims to address to solubilising keratin wastes, and to go further into production of new hybrid bio-composite membranes and fibres for textile and technical usages based on intimate mixture of polypeptides from keratin materials and cellulose from cellulose materials.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment (s).

## Claims

1. A composite comprising cellulose, or modified cellulose, and keratin polypeptide, wherein keratin polypeptides are mixed with said cellulose without any phase separation between keratin polypeptide and cellulose, **wherein the keratin comprises a disrupted keratin and wherein disruption of keratin is a disruption generated by superheated water.**

2. A composite according to claim 1, wherein the keratin comprises a hydrolyzed keratin.

3. A composite according to claim 1 or 2, wherein the disrupted keratin included is generated from feathers and/or coarse wool.

4. A composite according to any preceding claim, wherein said composite is a composite film or composite fiber comprising one or more polysaccharides and/or one or more modified polypeptides, wherein keratin polypetides are bonded to a cellulose polymer along the length of said composite, wherein preferably the ratio of cellulose or modified cellulose : keratin polypeptide remains substantially constant along the composite length, and wherein preferably the ratio of cellulose or modified cellulose : keratin polypeptide is between 99:0.1 and 10:90 by weight, wherein preferably cellulose polymer and keratin polypeptide are bonded to each other along the entire surface of a composite film or length of a composite fiber, and wherein the composite film or composite fiber comprises both cellulose or modified cellulose polymer and keratin polypeptide throughout its surface or length, respectively, and cross section.

5. A composite according to any preceding claim, wherein the composite fiber has a length of at least 3 millimeters and a diameter of preferably between 5 µm and 15 µm.

6. A composite according to any preceding claim, wherein the composite film or composite fiber can absorb and/or retain at least 10 times its weight of water.

7. A composite according to any preceding claim in a product, especially in
- packages,
- covers, e.g., CD cases,
- decorations, for example trim materials for covering objects,
- covering material in the area of agriculture or for environmental purposes,
- wall covers in the building area,
- cleaning cloths,
- hygiene applications like storage layers and cores of pads, diapers and the like, but also acquisition layers of hygiene products,
- textiles, especially medical textiles like wound treatment, but also clothing like socks, underwear, climatic clothing,
- in combination with e.g. wool used for e.g. clothing of all sorts,
- in beddings like cushions, blankets, pillows, pillowslips, bed linen etc., and/or
- in absorbing products.

8. A method of producing a composite, especially in form of a composite fiber or composite film, comprising cellulose or modified cellulose and keratin polypeptide,
said method comprising the step of contacting a solution or paste of cellulose with a solution of keratin and manufacturing a composite without separation of said cellulose and said keratin,
**wherein the method comprises extruding a solution or paste of cellulose and of keratin solution comprising keratin that has been subjected to a controlled degree of disruption, and**
**wherein the disruption of the keratin is achieved by superheated water.**

9. A method according to claim 8, said method comprising the step of extruding a solution, or a paste of one of cellulose or modified cellulose, and keratin polypeptide solution directly onto a bath of coagulation and/or said method comprising the step of composite formation from a solution of cellulose and keratin-based polypeptides directly on a solid support as a target and/or said method comprising the step of extruding a solution, or a paste of one of cellulose or modified cellulose, or keratin directly into a bath of the other of cellulose or keratin polypeptide solution, wherein said method comprises the step of extruding a solution/paste of cellulose or modified cellulose directly into a coagulation bath with keratin polypeptide solution.

10. A method according to claim 8 or 9, wherein a disruption of the keratin is achieved by hydrolysis.

11. A method according to any preceding claim, wherein the keratin is generated from feathers and/or course wool.

12. A method according to any preceding claim 8 to **11,** wherein the composite, especially the composite film or composite fiber formed in the film or fiber forming step, is subjected to a washing operation.

13. A method of producing a film or fiber according to any of claims 8 to 12, wherein the composite film or composite fiber produced by the method comprises a film or fiber according to any of claims 1 to 7, based on keratin generated from feathers or course wool whereby the keratin is disrupted by hydrolytic means with superheated water.

## Patentansprüche

1. Verbundstoff aus Zellulose oder modifizierter Zellulose und Keratin Polypeptid, wobei Keratin Polypeptide mit der Zellulose ohne irgendeine Phasentrennung zwischen Keratin Polypeptid und Zellulose gemischt werden, wobei das Keratin ein zerrissenes Keratin bildet und wobei das Zerreißen des Keratins ein Zerreißen ist, das durch überhitztes Wasser erzeugt wird.

2. Verbundstoff nach Anspruch 1, **dadurch gekennzeichnet, daß** das Keratin ein hydrolysiertes Keratin ist.

3. Verbundstoff nach Anspruch 1 oder 2, **dadurch gekennzeichnet, daß** das verwendete zerrissene Keratin aus Federn und / oder Rohwolle erzeugt wird.

4. Verbundstoff nach einem der vorhergehenden Ansprüche, **dadurch gekennzeichnet, daß** der Verbundstoff ein Verbundfilm oder eine Verbundfaser ist, die eine oder mehrere Polysaccharide und / oder ein oder mehrere modifizierte Polypeptide aufweist, wobei Keratin Polypeptide mit einem Zellulosepolymer längs der Länge des Verbundstoffes verbunden sind, wobei vorzugsweise das Verhältnis von Zellulose oder modifizierter Zellulose wie folgt ist: Keratin Polypeptid bleibt längs der Verbundlänge im wesentlichen konstant und wobei vorzugsweise das Verhältnis von Zellulose oder modifizierter Zellulose wie folgt ist: Keratin Polypeptid liegt zwischen 99 : 0,1 und 10 : 90 Gew.-%, wobei vorzugsweise Zellulosepolymer und Keratin Polypeptid miteinander längs der gesamten Oberfläche eines Verbundfilms oder längs einer Verbundfaser verbunden sind, und wobei der Verbundfilm oder die Verbundfaser sowohl Zellulose oder modifiziertes Zellulosepolymer als auch Keratin Polypeptid auf ihrer gesamten Oberfläche bzw. Länge und Querschnitt aufweist.

5. Verbundstoff nach einem der vorhergehenden Ansprüche, **dadurch gekennzeichnet, daß** die Verbundfaser eine Länge von wenigstens 3 mm und einen Durchmesser von vorzugsweise zwischen 5 µm und 15 µm aufweist.

6. Verbundstoff nach einem der vorhergehenden Ansprüche, **dadurch gekennzeichnet, daß** der Verbundfilm oder die Verbundfaser wenigstens das 10fache ihres Gewichtes an Wasser absorbieren und / oder zurückhalten kann.

7. Verbundstoff nach einem der vorhergehenden Ansprüche, der in einem Produkt enthalten ist, insbesondere in Paketen, Deckeln und dergleichen, CD-Hüllen, Dekorationen für beispielsweise Ausschneidmaterialien für abdeckende Gegenstände, Abdeckungsmaterial im Bereich der Landwirtschaft oder für Umweltzwecke, Wandabdeckungen im Gebäudebereich, Reinigungstücher, Hygieneanwendungen wie Speicherschichten und Kerne von Pads, Windeln und dergleichen, jedoch auch Aufnahmeschichten von Hygieneprodukten, Textilien, insbesondere medizinische Textilien zur Wundbehandlung, aber auch Kleidung wie Socken, Unterwäsche, Klimakleidung in Kombination mit beispielsweise Wolle, die beispielsweise für Kleidung aller Art verwendet wird, ferner Bettwaren wie Kissen, Decken, Kopfkissen, Kopfkissenbezüge, Bettwäsche, usw. und / oder in absorbierenden Produkten.

8. Verfahren zur Erzeugung eines Verbundstoffes, insbesondere in Form einer Verbundfaser oder eines Verbundilms, aufweisend Zellulose oder modifizierte Zellulose und Keratin Polypeptid, **dadurch gekennzeichnet, daß** das Verfahren den Schritt aufweist, daß eine Lösung oder Paste aus Zellulose mit einer Lösung von Keratin in Berührung gebracht wird und eine Zusammensetzung bzw. Verbindung hergestellt wird, ohne daß die Zellulose und das Keratin getrennt werden, wobei das Verfahren auch beinhaltet, daß eine Lösung oder Paste aus Zellulose und einer Keratinlösung extrudiert wird, wobei das Keratin einem kontrollierten Grad des Abbaus unterworfen wurde, und wobei der Abbau des Keratins durch überhitztes Wasser erreicht wird.

9. Verfahren nach Anspruch 8, **dadurch gekennzeichnet, daß** der Schritt der Extrusion einer Lösung oder einer Paste entweder aus Zellulose oder modifizierter Zellulose und einer Keratin Polypeptidlösung unmittelbar auf ein Koagulationsbad erfolgt, und / oder daß das Verfahren ferner den Schritt aufweist, daß aus einer Lösung aus Zellulose und keratinbasierten Polypeptiden eine Zusammensetzung oder Verbund gebildet wird, und zwar direkt auf einem Träger als Ziel und / oder wobei das Verfahren den Schritt der Extrusion einer Lösung oder einer Paste von Zellulose oder modifizierter Zellulose oder Keratin direkt in ein Bad des anderen der genannten Stoffe, nämlich Zellulose oder Keratin Polypeptidlösung aufweist, wobei das Verfahren schließlich den Schritt aufweist, daß eine Lösung / Paste aus Zellulose oder modifizierter Zellulose direkt in ein Koagulationsbad einer Keratin Polypeptidlösung extrudiert wird.

10. Verfahren nach Anspruch 8 oder 9, **dadurch gekennzeichnet, daß** ein Zerreißen des Keratins durch Hydrolyse erreicht wird.

11. Verfahren nach einem der vorhergehenden Ansprüche, **dadurch gekennzeichnet, daß** das Keratin aus Federn und / oder Rohwolle erzeugt wird.

12. Verfahren nach einem der Ansprüche 8 bis 11, **dadurch gekennzeichnet, daß** der Verbundstoff, insbesondere der Verbundfilm oder die Verbundfaser, die in dem Film gebildet wird oder dem Faserbildungsschritt, einem Waschvorgang unterworfen wird.

13. Verfahren zur Erzeugung eines Films oder einer Faser gemäß einem der Ansprüche 8 bis 12, **dadurch gekennzeichnet, daß** der Verbundfilm oder die Verbundfaser, die durch das Verfahren hergestellt werden, einen Film oder eine Faser gemäß einem der Ansprüche 1 bis 7 bilden, und zwar auf der Grundlage von Keratin, erzeugt aus Federn oder Rohwolle, wobei das Keratin durch eine hydrolytische Vorrichtung mit überhitztem Wasser zerrissen wird.

## Revendications

1. Matériau composite comprenant de la cellulose, ou de la cellulose modifiée, et un polypeptide de kératine, dans lequel des polypeptides de kératine sont mélangés avec ladite cellulose sans aucune séparation de phase entre le polypeptide de kératine et la cellulose, dans lequel la kératine comprend une kératine interrompue, et le processus d'interruption de la kératine est un processus d'interruption généré par de l'eau surchauffée.

2. Matériau composite selon la revendication 1, dans lequel la kératine comprend une kératine hydrolysée.

3. Matériau composite selon la revendication 1 ou 2, dans lequel la kératine interrompue incluse est générée à partir de plumes et/ou de laine brute.

4. Matériau composite selon l'une quelconque des revendications précédentes, dans lequel ledit matériau composite est un film composite ou une fibre composite comprenant un ou plusieurs polysaccharides et/ou un ou plusieurs polypeptides modifiés, dans lequel les polypeptides de kératine sont unis à un polymère de cellulose le long de la longueur dudit matériau composite, dans lequel de préférence le rapport de cellulose ou cellulose modifiée sur le polypeptide de kératine reste sensiblement constant le long de la longueur du matériau composite, et dans lequel de préférence le rapport de cellulose ou cellulose modifiée sur le polypeptide de kératine est entre 99:0,1 et 10:90 en poids, dans lequel de préférence le polymère de cellulose et le polypeptide de kératine sont unis l'un à l'autre le long de la surface entière d'un film composite ou de la longueur entière d'une fibre composite, et dans lequel le film composite ou la fibre composite comprend à la fois du polymère de cellulose ou du polymère de cellulose et du polypeptide de kératine sur toute sa surface ou toute sa longueur respectivement, et sur toute sa section transversale.

5. Matériau composite selon l'une quelconque des revendications précédentes, dans lequel la fibre composite a une longueur d'au moins 3 mm et un diamètre de préférence entre 5 µm et 15 µm.

6. Matériau composite selon l'une quelconque des revendications précédentes, dans lequel le film composite ou la fibre composite peut absorber et/ou retenir au moins 10 fois son poids d'eau.

7. Matériau composite selon l'une quelconque des revendications précédentes dans un produit, spécialement dans
- des emballages
- des couvercles, par exemple de boîtiers pour compact disc,
- des décorations, par exemple des matériaux d'habillage pour couvrir des objets,
- des matériaux de couverture dans le domaine de l'agriculture ou pour des besoins environnementaux,
- des couvertures murales dans le domaine du bâtiment,
- des tissus de nettoyage
- des applications hygiéniques telles que des couches de stockage et des noyaux de coussinets, couches et similaires, mais également des couches d'acquisition de produits hygiéniques,
- des textiles, spécialement textiles médicaux tels que pour le traitement de blessures, mais également habillement, tels que chaussettes, sous-vêtements, vêtements climatiques,
- en combinaison, par exemple avec de la laine, utilisée par exemple pour des vêtements de toutes sortes, dans la literie, tels que coussins, couvertures, oreillers, taies d'oreiller, draps de lit, etc., et/ou
- dans des produits absorbants.

8. Procédé de production d'un matériau composite, spécialement sous la forme de fibres composites ou de film composite, comprenant de la cellulose ou de la cellulose modifiée et un polypeptide de kératine,
ledit procédé comprenant l'étape consistant à mettre en contact une solution ou une pâte de cellulose avec une solution de kératine et à fabriquer un matériau composite sans séparation de ladite cellulose et de ladite kératine,
dans lequel le procédé comprend l'étape consistant à extruder une solution ou une pâte de cellulose et de solution de kératine comprenant une kératine qui a été soumise à un degré d'interruption contrôlé, et
dans lequel le processus d'interruption de la kératine est réalisé avec de l'eau surchauffée.

9. Procédé selon la revendication 8, comprenant l'étape consistant à extruder une solution ou une pâte de cellulose ou de cellulose modifiée, et une solution de polypeptide de kératine directement sur un bain de coagulation et/ou ledit procédé comprenant l'étape consistant à former un matériau composite à partie d'une solution de cellulose et de polypeptide à base de kératine directement sur un support solide tel qu'une cible et/ou ledit procédé comprenant l'étape consistant à extruder une solution ou une pâte de cellulose ou de cellulose modifiée, ou de kératine directement dans un bain de l'autre composante c'est-à-dire la cellulose ou la solution de polypeptide de kératine, dans lequel ledit procédé comprend l'étape consistant à extruder une solution/pâte de cellulose ou de cellulose modifiée directement dans un bain de coagulation avec une solution de polypeptide de kératine.

10. Procédé selon la revendication 8 ou 9, dans lequel l'interruption de la kératine est obtenue par hydrolyse.

11. Procédé selon l'une quelconque des revendications précédentes, dans lequel la kératine est générée à partir de plumes et/ou de laine brute.

12. Procédé selon l'une quelconque des revendications 8 à 11, dans lequel le matériau composite, spécialement le film composite ou la fibre composite formé(e) dans l'étape de formation de film ou de fibre, est soumis(e) à une opération de lavage.

13. Procédé pour produire un film ou une fibre selon l'une quelconque des revendications 8 à 12, dans lequel le film composite ou la fibre composite produit(e) par le procédé comprend un film ou une fibre selon l'une quelconque des revendications 1 à 7, basé(e) sur de la kératine générée à partir de fibres ou de laine brute, dans lequel la kératine est interrompue au moyen d'une hydrolyse avec de l'eau surchauffée.
